Europäisches Patentamt

European Patent Office

Office européen des brevets

(11) Publication number: **0 399 725**
**A1**

# EUROPEAN PATENT APPLICATION

(21) Application number: **90305295.9**

(51) Int. Cl.⁵: **G05B 23/02, G01D 18/00**

(22) Date of filing: **16.05.90**

(30) Priority: **22.05.89 US 354951**

(43) Date of publication of application:
**28.11.90 Bulletin 90/48**

(84) Designated Contracting States:
**BE CH ES FR GB IT LI**

(71) Applicant: **WESTINGHOUSE ELECTRIC CORPORATION**
**Westinghouse Building Gateway Center**
**Pittsburgh Pennsylvania 15222(US)**

(72) Inventor: **Kenny, Thomas Joseph**
**717 Bar Harbor Drive**
**Pittsburgh, PA 15239(US)**

(74) Representative: **van Berlyn, Ronald Gilbert**
**23, Centre Heights**
**London, NW3 6JG(GB)**

(54) Automatic transducer excitation source testing system.

(57) An automatic transducer excitation source testing system that provides on line testing of the magnitude of current provided to a transducer (10, 155). The system also enables testing of excitation source redundancy. The system includes an excitation source (15, 150); an electrical element (80, 190); a connection device (75, 90, 95; 185, 195, 205) having an output, for selectively connecting the output to one of the transducer (10, 155) and the electrical element (80, 190), and for selectively connecting the excitation source (15, 150) to one of the electrical element (80, 190) and the transducer (10, 155), in accordance with at least one control signal; and a control device (85) for providing the at least one control signal to connect the excitation source (15, 150) to the electrical element (80, 190) during a predetermined time and to the transducer (10, 155) during another predetermined time so that the transducer (10, 155) remains on line.

FIG.3

EP 0 399 725 A1

## AUTOMATIC TRANSDUCER EXCITATION SOURCE TESTING SYSTEM

The present application is a continuation-in-part of United States application Serial No. 07/320,335, filed on March 8, 1989.

The present invention relates to automatic calibration of process transducers, and more particularly to the testing of a transducer excitation source. To calibrate transducer input circuitry, test systems typically disconnect a transducer from input circuitry and replace it with a reference (either voltage or current). Disconnection of a transducer from the input circuitry for either calibration of the transducer or its excitation source is undesirable. This is because during the disconnect time a system controller does not have the ability to determine the state of a process variable that the disconnected transducer is intended to detect. This is especially critical in nuclear power plant control systems where continuous monitoring of process variables is highly desirable.

Calibration systems have been developed to minimize the transducer disconnect time. One such system is shown in U.S. Patent No. 4,642,636 which is hereby incorporated by reference. Figure 1 is a block diagram of a system embodying the calibration system disclosed in U.S. Patent No. 4,642,636. In Figure 1, a transducer 10, such as a RTD (resistance temperature device) senses a process variable. An excitation current source 15 provides the RTD 10 with a constant current. An example of an excitation current source 15 is shown in U.S. Patent No. 4,672,226 which is hereby incorporated by reference. A relay 20 (Figure 1) switches the current from excitation source 15 to either the RTD 10 or a precision resistor such as one of the precision resistors 25, 30, in order to provide a reference signal to an amplifier 35. A relay 40 connects the amplifier 35 to either the RTD 10 or to another relay 45. The relay 45, in turn, connects either the high value precision resistor 25 or the low value precision resistor 30 to the amplifier 35 via relay 40.

U.S. Patent No. 4,700,174 discloses an improvement over the calibration system taught by U.S. Patent No. 4,642,636. Figure 2 is a block diagram of a system embodying the calibration system disclosed in U.S. Patent No. 4,700,174 which is hereby incorporated by reference. In Figure 2, the current sources 15 are connected in parallel (i.e., auctioneered) through diodes 50. U.S. Patent No. 4,672,226 discusses the operation of such a redundant or auctioneered excitation current source arrangement. Auctioneering of the excitation sources 15 allows one of the excitation sources 15 to be removed without interrupting current through the RTD 10. The signal from RTD 10 passes through a test relay 55 and a multiplexer 60 to amplifier 35. Applicable regulations require a circuit such as test relay 55 to be included in nuclear power monitoring systems to enable external test signals to be injected into the system via, for example, a terminal 65. During injection of such an external signal, test relay 55 disconnects RTD 10 from amplifier 35, taking the monitored process variable off line. However, during normal operation, the RTD 10 is not taken off line, even during calibration of the system as discussed in detail in U.S. Patent No. 4,700,174. Multiplexer 60 connects precision resistors 25 and 30 to amplifier 35 after the status of the RTD 10 has been tested by the system processor.

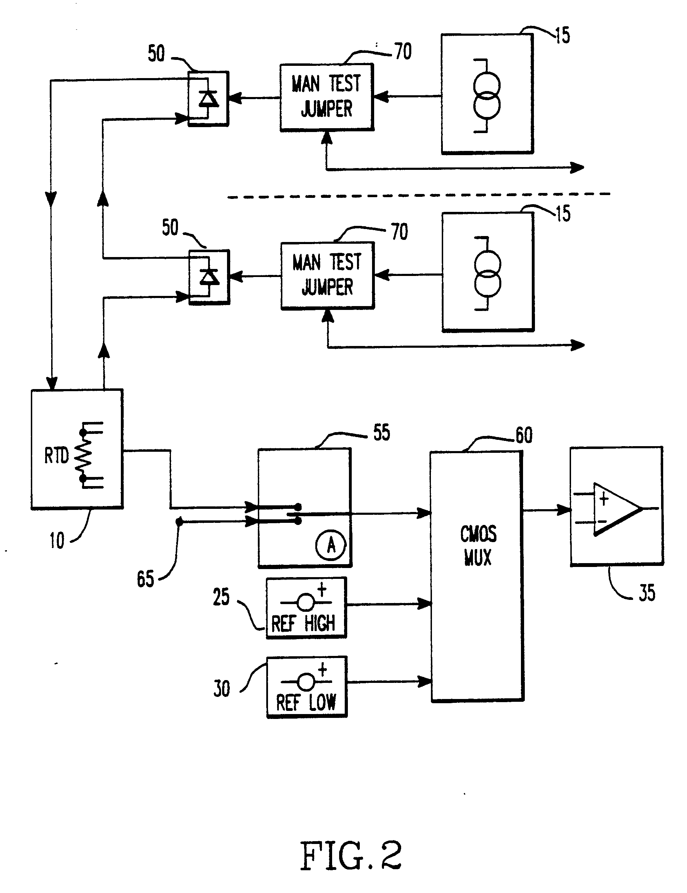

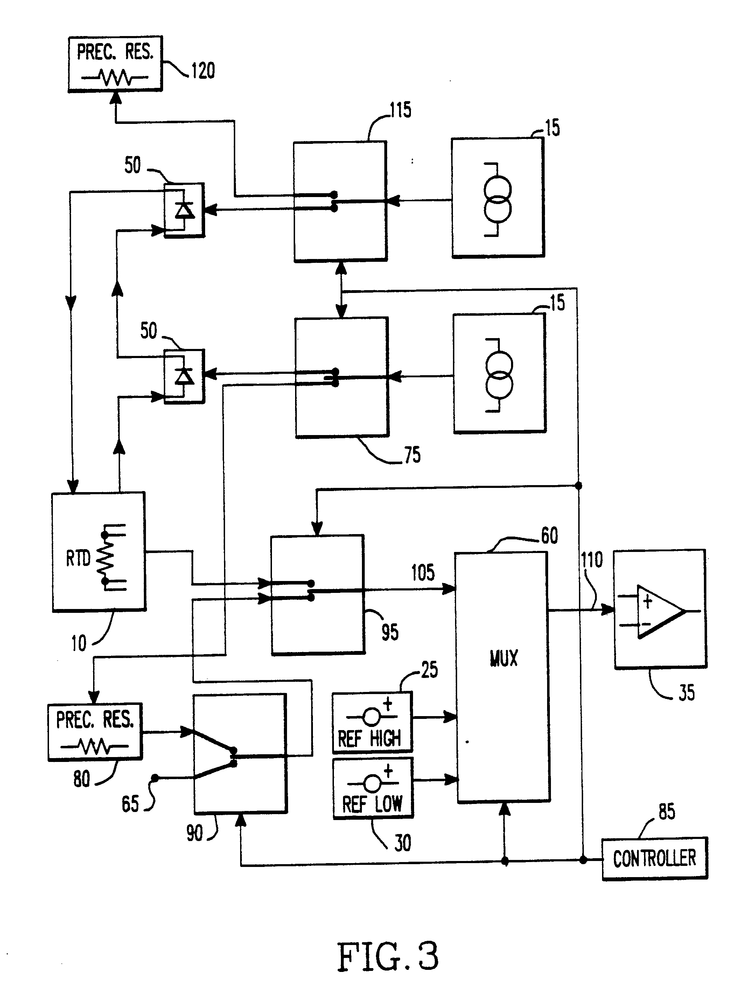

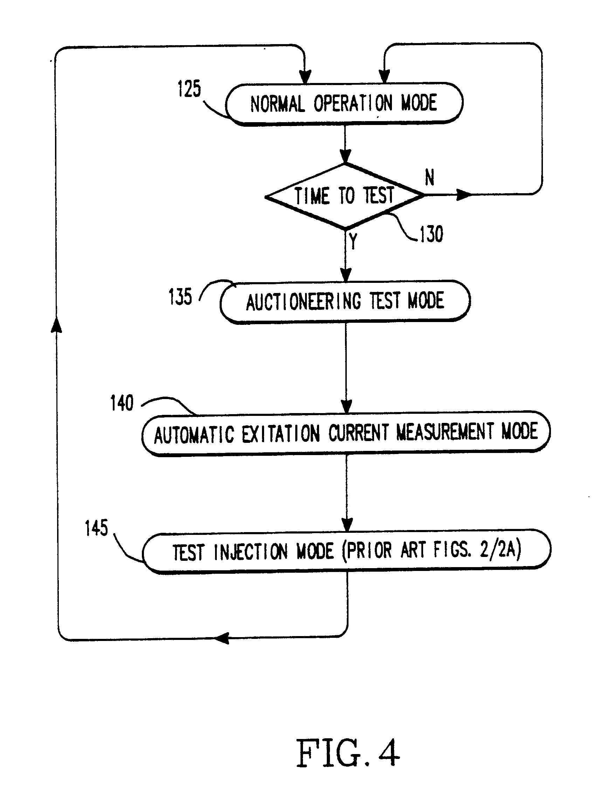

It is not possible to automatically calibrate the excitation current sources 15 in the system disclosed in Figure 2. Instead, the excitation sources 15 must be tested manually, via a jumper 70, and the results of this test provided to the system processor to be stored as fixed values until the next check of the excitation sources. Also, with the Figure 2 system, it is not possible to determine if the excitation source redundance (i.e., auctioneering) feature is functional without manually removing one of the excitation sources 15 and monitoring the output of amplifier 35.

The present invention provides an excitation source; an electrical element; a connection means, having an output, for selectively connecting the output to one of the transducer and the electrical element, and for selectively connecting the excitation source to one of the electrical element and the transducer, in accordance with at least one control signal; and control means for providing the at least one control signal to connect the excitation source to the electrical element during a predetermined time and to the transducer during another predetermined time.

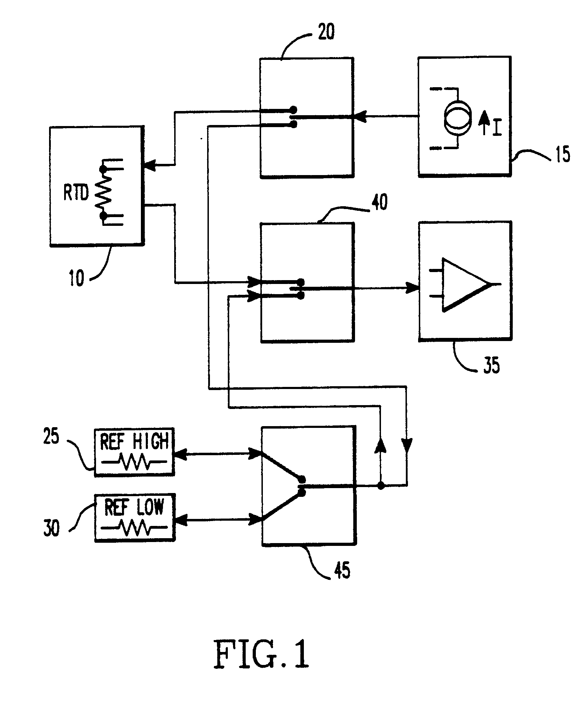

Figure 1 is a block diagram of a known transducer calibration system.

Figure 2 is a block diagram of another known transducer calibration system.

Figure 3 is a block diagram of an automatic transducer excitation source testing system embodying the present invention.

Figure 4 is a flow diagram of transducer excitation source testing in accordance with the present invention.

Figure 5 is a block circuit diagram of another embodiment of a testing system according to the present invention.

Figure 6 is a block diagram of a modified portion of the embodiment of Figure 5.

Figure 7 is a block diagram of a further embodiment of the invention for transducer systems employing a plurality of redundant power sources.

Figure 3 is a block diagram of an automatic transducer excitation source testing system embodying the present invention. The elements of the Figure 3 system that are the same as those shown in Figure 2 have the same reference numerals as shown in Figure 2. In Figure 3, an excitation source 15 supplies a constant current to, for example, RTD 10. As shown, excitation source 15 is connected to an input of a switch 75. A first output of the switch 75 is connected to an electrical element 80. A second output of the switch 75 is connectable to an RTD 10 through a source coupling means 50 that is explained below.

A controller 85 provides a control signal to the switch 75. This control signal causes current from the excitation source 15 to be supplied to either the RTD 10 or to the electrical element 80. In a preferred embodiment of the present invention, the electrical element 80 comprises a precision resistor. The electrical element 80 is connected to a first input of a second switch 90. A second input of the second switch 90 is connectable to receive an external test signal from terminal 65, as discussed with respect to test relay 55 shown in Figure 2. The second switch 90 connects either the electrical element 80 or the terminal 65 to an output of the second switch 90, in accordance with a control signal provided by the controller 85. The controller 85 comprises a control means and can include, for example, a processor or sequential hardware circuitry.

A third switch 95 connects either the RTD 10 or the output of the second switch 90 to an input 105 of a multiplexer means 60. A first input of the third switch 95 is connectable to the RTD 10 as shown in Figure 3, and a second input of the third switch 95 is connected to the output of the second switch 90. The third switch 95 receives a control signal from controller 85 and connects either the first input or the second input to the multiplexer means 60, in accordance with this control signal. The multiplexer means 60 can comprise any multiplexing element, such as a common semiconductor multiplexer or an electro-mechanical switch, that are controllable by at least one control signal provided by a controller such as controller 85. As shown in Figure 3, the amplifier 35 amplifies an output 110 of the multiplexer means 60. The output of the amplifier 35 is sampled by a processor (not shown).

The state of the RTD 10 is periodically checked by the processor (not shown) by sampling the output of the amplifier 35. Because the processor has other tasks such as checking the state of a number of other transducers, the RTD 10 need not be continuously connected to the amplifier 35. It is sufficient that the RTD 10 be connected to the amplifier 35 at the predetermined time the processor samples the output of the amplifier 35 in order to test the state of the RTD 10. Under such a condition, the RTD 10 is in an on line condition, because at the times that the processor needs to check the status of the RTD 10, the transducer is connected on line to the amplifier 35. In other words, the disconnection of the RTD 10 from amplifier 35 is transparent to the processor. One illustrative sampling scheme that achieves such transparency is discussed in U.S. Patent No. 4,700,174.

To test the magnitude of the current provided by the excitation source 15, the controller 85 connects the excitation source 15 to the first output of switch 75; connects the first input of the second switch to the second input of the third switch 95; connects the second input of the third switch 95 to the multiplexer means 60; and connects the multiplexer input 105 to the amplifier 35 via output 110. To ensure that the RTD 110 is on line, these connections are made during a predetermined time that the processor does not need to sample the status of the RTD 10. For example, the excitation source 15 can be tested at a time when the processor has sampled all of the transducers, and thus has completed its sampling cycle; or during the time between samples of transducers. The multiplexer means 60 can also periodically connect respective ones of electrical reference elements 25 and 30 to the output 110 in order to provide high and low reference voltages to the processor via the amplifier 35. One scheme for periodically connecting these elements to the output 110 is discussed in U.S. Patent No. 4,700,174. The first, second and third switches (75, 90, 95) together with the multiplexer means 60 comprise a connection means for selectively connecting the output 110 to one of the RTD 10 and the electrical element 80, and for selectively connecting the excitation source 15 to one of the electrical element 80 and the RTD 10, in accordance with at least one control signal provided by the controller 85.

Figure 3 also illustrates an optional additional excitation source 15. This additional excitation source 15 is connected to the input of a fourth switch 115. A first output of the fourth switch 115 is connected to an additional electrical element 120. The additional electrical element 120 and the fourth switch 115 are optionally used if it is desired to include excitation source redundancy. The additional electrical element 120 is connected through switches (not shown) that are arranged in a manner similar to switches 90 and 95, and thus, to the multiplexer means 60 or to an additional multiplexer means (not shown). A second output of the fourth switch 115 is connectable to the RTD 10 through a source coupling means 50. The coupling means 50 can comprise, for example, a diode as shown in Figure 3. The additional excitation source 15, when coupled to the RTD 10 through the fourth switch 115 and the source coupling means 50 provides excitation source redundancy. Excitation source redundancy is generally described in U.S. Patent No. 4,672,226.

Together, the first and fourth switches (75, 115) enable the excitation source redundancy feature to be tested, and the functioning or malfunctioning state of the excitation sources 15 to be determined. For example, the controller 85 causes the third switch 95 to connect RTD 10 to multiplexer input 105, and causes the multiplexer means 60 to connect the multiplexer input 105 to the output 110. In this state, controller 85 alternately connects the RTD 10 to one of the excitation sources 15. If the excitation source redundancy feature is operating properly, thus switching the RTD 10 between excitation sources 15 will not affect the state of the RTD 10 as is appears at the output of amplifier 35.

Figure 4 is a flow diagram of the processing of an automatic transducer excitation source testing system embodying the present invention. .During normal operation, processing step 125, the controller 85 connects the excitation source 15 to RTD 10 through the first switch 75 and coupling means 50. Similarly, controller 85 connects the additional excitation source 15 (if included in the system) to the RTD 10 through the fourth switch 115 and coupling means 50. The third switch 95 is set to connect the RTD 10 to the multiplexer input 105. In this normal operational mode, the state of the second switch 90 is irrelevant, because the RTD 10 is connected to the multiplexer means 60 through the third switch 95. At a predetermined time, the multiplexer 60 connects the multiplexer input 105 to the output 110, and thus to amplifier 35 for sampling by the processor. Thus, the RTD 10 appears to the processor as being on line.

After the processor samples, for example, all of the transducers in a system, processing proceeds to decision step 130. This step determines if it is time to perform system testing. System testing can occur at any selected time under control of an operator, and in nuclear monitoring systems is performed, for example, at least once a month. If it is not time to perform system testing, then processing returns to the normal operation mode step 125. Otherwise, processing proceeds to an auctioneering test mode step 135. In this step, controller 85 alternately connects and disconnects the excitation sources 15 to an from RTD 10. Simultaneously, the output of amplifier 35 (the third switch 95 having its first input connected to multiplexer input 105) is sampled to ensure that alternation of the excitation sources 15 does not affect the state of the RTD 10 as it appears at the output of amplifier 35.

After verifying that the excitation source redundancy (i.e., auctioneering) is functioning properly, the processing proceeds to step 140. In step 140, the first switch 75 connects the excitation source 15 to the electrical element 80; that is, to a precision resistor. The second switch 90 is set to connect its first input to the second input of the third switch 95. The third switch 95 connects its second input to the multiplexer input 105, and the multiplexer means 60 connects the multiplexer input 105 to amplifier 35 via output 110. The output of the amplifier 35 therefore represents the magnitude of the current provided by the excitation source 15.

After sampling the output of amplifier 35, processing proceeds to step 145. In step 145. the third switch 95 connects its second input to the multiplexer input 105. The second switch 90 connects the terminal 65 to the second input of the third switch 95. With these connections, an external test signal can be injected into the system, and sampled at the output of amplifier 35 when the multiplexer 60 connects multiplexer input 105 to output 110. After completing testing of the external signal, processing returns to the normal operational mode processing step 125.

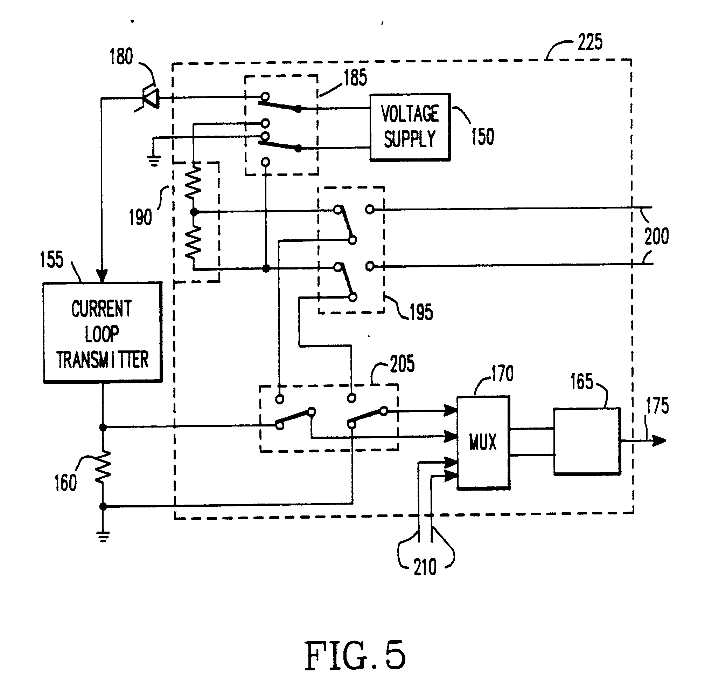

Figure 5 is a block diagram of an embodiment of an automatic transducer excitation source testing system for testing a voltage supply 150 that serves to supply power to a current loop transmitter 155 which generates a current whose magnitude corresponds to the value of a process parameter, such as temperature or pressure, which is being monitored, for example for control purposes. The current generated by transmitter 155 flows through a reference resistor 160 and the resulting voltage across resistor 160 is, during normal monitoring operation, supplied to a buffer and signal translating circuit 165 containing an amplifier corresponding to amplifier 35, via a multiplexer 170, to produce an analog signal which is furnished in a respective channel 175 to loop processors (not shown) which form part of a control loop for a process which is being controlled. Advantageously, a Zener diode 180 is connected in series between supply 150 and transmitter 155 to provide protection against high voltage transients which may be generated in the circuit containing the current loop transmitter. This function of Zener diode 180 is described in further detail in U.S. Patent No. 4,644,440.

In accordance with the present invention, the output of voltage supply 150 is connected to the common terminals of a first DPDT relay 185 having a first set of switchable contacts connected to Zener diode 180 and ground, respectively. The second set of switchable contacts of relay 185 are connected to respective ends of a resistive voltage divider 190.

A second DPDT relay 195 has a first set of switchable contacts connected to respective ends of one of the two resistors of divider 190. The purpose of voltage divider 190 is to provide an output voltage which is comparable in magnitude to the voltage across resistor 160 when the output from current loop transmitter 155 is at a predetermined point of its operating range.

A second set of switchable contacts of relay 195 are connected to test input lines 200 providing a test signal similar to that supplied to terminal 65 in the device shown in Figure 2.

The common terminals of relay 195 are connected to a first set of switchable contacts of a third DPDT relay 205.

The second set of switchable contacts of relay 205 are connected across resistor 160 and the common terminals of relay 205 are connected to one input of multiplexer 170. Two other inputs of multiplexer 170 are connected to lines 210 which supply on-line calibration reference signals similar to those supplied by resistors 25 and 30 of Figure 2 and to those supplied to multiplexer 54 in the embodiment shown in Figure 2A of U.S. Patent No. 4,700,174.

The signals applied to the various inputs of multiplexer 170 are switched to the multiplexer output in a manner described in U.S. Patent No. 4,700,174.

With relays 185 and 205 in the positions shown in Figure 5, the system operates in its normal on-line manner, with power being delivered from supply 150 to transmitter 155 and the voltage produced across resistor 160 by the output current of transmitter 155 being supplied to channel 175 in alternation with signals applied via lines 210.

In order to test the components associated with channel 175, particularly circuit 165 and multiplexer 170, relays 195 and 205 may be switched into the positions opposite to those illustrated, whereupon an external test signal is applied to one input of multiplexer 170.

In order to test the integrity of voltage supply 150, relays 185 and 205 are switched into the positions opposite to those illustrated, while relay 195 is placed in the illustrated position, so that the voltage produced across the connected resistor of divider 190 is applied to one input of multiplexer 170.

The control of relays 185, 195 and 205 can be performed by a controller similar to controller 85 shown in Figure 3, during a procedure as shown by the flow diagram of Figure 4.

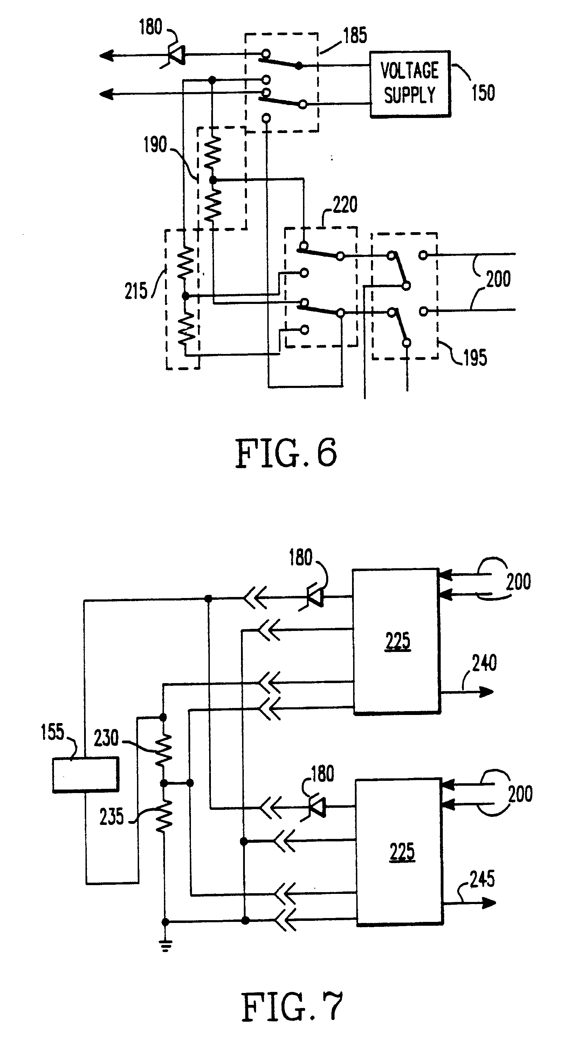

Under certain circumstances, it may be desirable to test the operating state of voltage supply 150 under varying load conditions. This may be achieved, as shown in Figure 6, by providing at least one additional voltage divider 215 having a total resistance different from that of divider 190 but having a division ratio selected to supply an output voltage comparable to that produced by divider 190. Dividers 190 and 215 can be connected selectively to the first switchable contacts of relay 195 via a further DPDT relay 220. As can be seen from Figure 6, dividers 190 and 215 are connected to relay 220 in such a manner that only one divider will be connected across the second switchable contacts of relay 185 and across the outputs of voltage supply 150 at any given time. Relay 220 can be switched between its two positions by signals from the same controller as that controlling the other relays. If needed, further voltage dividers having different resistance values, along with further relay stages, can be provided.

The testing system according to the present invention finds particular utility for testing redundant voltage supplies, such as in an arrangement of the type described in U.S. Patent No. 4,644,440. Such an arrangement is shown in Figure 7 where two voltage supplies are each included in a circuit arrangement 225 having the components enclosed by the broken line box of Figure 5, with the outputs of the two voltage supplies being connected together via Zener diodes 180 to auction the power between the two voltage supplies. In this case, the output current from current loop transmitter 155 is conducted in series through two reference resistors 230 and 235, each connected to a respective one of the circuit arrangements 225. Each circuit arrangement has a respective output channel 240 or 245.

As further shown in Figure 7, each unit composed of a circuit arrangement 225 and its associated Zener diode 180 is provided as a plug-in module, permitting replacement of either arrangement, while the voltage supply of the other arrangement continues to drive current loop transmitter 155.

The relays shown in Figures 5 and 6 can be replaced by semiconductor switches.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

| IDENTIFICATION OF REFERENCE NUMERALS USED IN THE DRAWINGS | | |
|---|---|---|
| LEGEND | REF. NO. | FIGURE |
| CMOS MUX | 60 | 2 |
| MAN TEST JUMPER | 70 | 2 |
| MAN TEST JUMPER | 70 | 2 |
| CONTROLLER | 85 | 3 |
| NORMAL OPERATION MODE | 125 | 4 |
| TIME TO TEST | 130 | 4 |
| AUCTIONEERING TEST MODE | 135 | 4 |
| AUTOMATIC EXCITATION CURRENT MEASUREMENT MODE | 140 | 4 |
| TEST INJECTION MODE (PRIOR ART FIGS. 2/2A) | 145 | 4 |
| VOLTAGE SUPPLY | 150 | 5 |
| VOLTAGE SUPPLY | 150 | 6 |
| CURRENT LOOP TRANSMITTER | 155 | 5 |
| MUX | 170 | 5 |

## Claims

1. An automatic transducer excitation source testing system, connectable to a transducer, for providing signals to an amplifier at predetermined times, said system having an excitation source and an electrical element, and characterized by: connection means, having an output, for selectively connecting said output to one of the transducer and said electrical element, and for selectively connecting said excitation source to one of said electrical element and the transducer, in accordance with at least one control signal; and control means for providing said at least one control signal to connect said excitation source to said electrical element during one of the predetermined times and to the transducer during another one of the predetermined times.

2. An automatic transducer excitation source testing system according to claim 1, wherein said connection means is characterized by:
a first switch having an input operatively connected to said excitation source, a first output operatively connected to said electrical element and a second output connectable to the transducer;
a second switch having an input operatively connected to said electrical element and an output; and
a third switch having a first input connectable to the transducer, a second input operatively connected to said output of said second switch and an output.

3. An automatic transducer excitation source testing system according to claim 2, wherein said connection means is further characterized by:
multiplexer means for selectively connecting said output of said third switch to the amplifier during at least said one of the predetermined times.

4. An automatic transducer excitation source testing system according to claim 3, further characterized by:
additional electrical elements, and
said multiplexer means including means for selectively connecting respective ones of said additional electrical elements to the amplifier during at least a further one of the predetermined times.

5. An automatic transducer excitation source testing system according to claim 3, further characterized by:
an additional excitation source;
an additional electrical element, and
said connection means further including a fourth switch having an input operatively connected to said additional excitation source, a first output operatively connected to said additional electrical element and a second output connectable to the transducer.

6. An automatic transducer excitation source testing system according to claim 5, wherein each of said excitation source and said additional excitation source have a functioning and malfunctioning state, and said system further characterized by:

EP 0 399 725 A1

source coupling means connectable to the transducer, for coupling one of said excitation source and said additional excitation source to the transducer in accordance with the state of said excitation source and said additional excitation source.

7. An automatic transducer excitation source testing system according to claim 6, wherein said source coupling means comprises a pair of diodes respectively connected to the second outputs of said first and fourth switches.

8. An automatic transducer excitation source testing system that is connectable to a transducer, for providing signals to an amplifier at predetermined times, said system having an excitation source, and a precision electrical element and characterized by:

a first switch having an input operatively connected to said excitation source, a first output operatively connected to said precision electrical element and a second output connectable to the transducer;

a second switch having a first input operatively connected to said precision electrical element, a second input connectable to receive a test signal, and an output;

a third switch having a first input connectable to the transducer, a second input operatively connected to the output of said second switch, and an output; and

multiplexer means for periodically connecting the output of said third switch to the amplifier.

9. An automatic transducer excitation source testing system according to claim 8, further characterized by:

a plurality of electrical reference elements,

and said multiplexer means including means for periodically connecting respective ones of said electrical reference elements to the amplifier.

10. An automatic transducer excitation source testing system according to claim 8, wherein each of said switches comprises a relay.

11. An automatic transducer excitation source testing system according to claim 8, wherein each of said switches comprises a semiconductor switch.

12. An automatic transducer excitation source testing system according to claim 8 wherein said excitation source is a voltage source, said precision electrical element is a voltage divider having a center tap, and further characterized by said first switch being connected such that when said input and first output of said first switch are connected together, the voltage provided by said source is applied across said divider.

13. An automatic transducer excitation source testing system according to claim 12 wherein said first input of said second switch is connected to said center tap of said divider.

14. An automatic transducer excitation system according to claim 13 wherein the transducer produces an output current and is connected to a resistor through which the output current flows, and said first input of said third switch is connectable to the resistor.

15. An automatic transducer excitation source testing system according to claim 8 wherein said excitation source is a voltage source, said precision electrical element comprises a plurality of voltage dividers each having a respectively different resistance and a center tap, and characterized by said first switch being connected such that when said input and first output of said first switch are connected together, the voltage provided by said source is applied across one of said dividers, and said system further characterized by a fourth switch connected between said voltage dividers and said first input of said second switch for selectively connecting any one of said voltage divider center taps to said first input of said second switch.

16. A plurality of automatic transducer excitation source testing systems, each as defined in claim 12, each connectable to a single transducer, and each comprising a plug-in module.

17. An automatic transducer excitation system according to claim 1 wherein said excitation source is a voltage source, said electrical element is a voltage divider having a center tap, and characterized by said connection means being connected such that when said connection means connect said source to said electrical element, the voltage provided by said source is applied across said divider.

18. An automatic transducer excitation source testing system according to claim 1 wherein said excitation source is a voltage source, said electrical element comprises a plurality of voltage dividers each having a respectively different resistance and a center tap, and characterized by said connection means being connected such that when said connection means connect said source to said electrical element, the voltage provided by said source is applied across a selected one of said dividers.

19. A plurality of automatic transducer excitation source testing systems, each as defined in claim 17, each connectable to a single transducer, and each comprising a plug-in module.

7

FIG.1

FIG. 2

FIG.3

125 — NORMAL OPERATION MODE

TIME TO TEST — 130

135 — AUCTIONEERING TEST MODE

140 — AUTOMATIC EXITATION CURRENT MEASUREMENT MODE

145 — TEST INJECTION MODE (PRIOR ART FIGS. 2/2A)

FIG. 4

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 147 941 (WESTINGHOUSE ELECTRIC CORP.) * Page 7, line 31 - page 10, line 18; figures 3,4 * | 1 | G 05 B 23/02 G 01 D 18/00 |
| D,A | | 2,5,9, 10,12, 17,18 | |
| | --- | | |
| D,A | EP-A-0 194 471 (WESTINGHOUSE ELECTRIC CORP.) * Abstract; page 3, lines 10-19; page 3, line 35 - page 4, line 14; figure 1 * | 1,6,7, 16,19 | |
| | --- | | |
| A | PATENT ABSTRACTS OF JAPAN, vol. 9, no. 53 (E-301), 7th March 1985; & JP-A-59 191 955 (YOKOGAWA HOKUSHIN DENKI K.K.)) 31-10-1984 * Abstract * | 6,7 | |
| | ----- | | TECHNICAL FIELDS SEARCHED (Int. Cl.5) |
| | | | G 01 D G 05 B G 05 F H 03 M |

The present search report has been drawn up for all claims

| Place of search | Date of completion of the search | Examiner |
|---|---|---|
| THE HAGUE | 23-08-1990 | CHAPPLE I.D. |